# EUROPEAN PATENT APPLICATION

(11) **EP 3 396 307 A1**
(43) Date of publication of application: **31.10.2018**
(21) Application number: 16878668.9
(22) Date of filing: 20.12.2016
(51) Int. Cl.: G01B 11/00, G02B 3/00, G02B 3/06, G09F 19/12

(54) **MARKER**

(30) Priority: 22.12.2015 JP 2015249997
(71) Applicant: Enplas Corporation, Kawaguchi-shi, Saitama 332-0034 (JP)
(72) Inventor: SAITO, Tomohiro, Saitama 331-0034 (JP); KAWAMOTO, Yuta, Saitama 331-0034 (JP); OSHIMA, Yuya, Saitama 331-0034 (JP); SHIOTA, Mitsuaki, Saitama 331-0034 (JP)
(74) Representative: Epping - Hermann - Fischer
(86) International application number: PCT/JP2016/087886
(87) International publication number: WO 2017/110779

(57) **Abstract**

This marker has: an optically transparent convex plastic lens section having a first surface that includes convex surface sections and flat surface sections, and a second surface that includes first regions and second regions other than the first regions, the second surface being disposed in a position on the reverse side to the first surface; a section to be detected that is formed in the first regions and/or the second regions; and a positioning section formed in those regions of the second surface that correspond to the flat surface sections, the positioning section indicating positions in the first regions that correspond to the convex surface sections. The first regions are concave sections or convex sections disposed in those regions of the second surface that correspond to the convex surface sections.

## Description

### Technical Field

The present invention relates to a marker.

### Background Art

As a marker (which is also called "image indicator") employing a combination of a lens and a pattern, an image display sheet including a lenticular lens and an image formation layer is known. The lenticular lens has a structure in which a plurality of cylindrical lenses are arranged side by side. In addition, the image formation layer is a pattern corresponding to each cylindrical lens. When the marker is viewed from the side of the convex surface parts of the cylindrical lenses, the image of the pattern moves or deforms depending on the viewing positions. In the technical fields of augmented reality (AR), robotics and the like, the marker is useful as a measuring device for recognizing the position, the orientation of an object and the like, and for such a use, the arrangement of the pattern and the like are conventionally studied (see, e.g., PTL 1 and PTL 2).

### Citation List

### Patent Literature

PTL 1
   Japanese Patent Application Laid-Open No. 2013-025043
PTL 2
   Japanese Patent Application Laid-Open No. 2012-145559

### Summary of Invention

### Technical Problem

In a marker, the position, shape and the like of the image to be observed are important points, and therefore it is necessary to form each pattern at a specific position with respect to the vertex of the lens in the plane direction of the cylindrical lens. Downsizing of the marker is desirable; however, the allowable error in the plane direction of the pattern decreases as the maker is downsized, and, for example, the allowable error in the plane direction of the pattern of a downsized marker is about several micrometers.

In addition, it is conceivable to integrally form a marker by injection molding. In this case, naturally, the lens part corresponding to the lens and the pattern part corresponding to the pattern are integrally molded with respective metal-mold pieces. In the case where a marker is produced by injection molding, the metal-mold pieces are aligned by repeating trial moldings until a desired shape of the marker is obtained.

However, when the pattern part is observed from the lens part side, the position of the pattern part with respect to the lens part cannot be correctly determined due to refraction at the lens part since the lens part and the pattern part are disposed on opposite sides in the marker. As a result, the metal mold pieces cannot be highly precisely aligned in injection molding, making it difficult to produce a highly accurate marker.

An object of the present invention is to provide a marker which can be precisely produced.

### Solution to Problem

A marker of an embodiment of the present invention includes: a convex lens part made of an optically transparent resin and including a first surface and a second surface disposed on a side opposite to the first surface, the first surface including a convex surface part and a flat surface part, the second surface including a first region and a second region which is a region other than the first region in the second surface; a detection object part formed in one of the first region and the second region, or in both of the first region and the second region; and a positioning part formed on the second surface in a region corresponding to the flat surface part, and configured to indicate a position of the first region with respect to the convex surface part. The first region is a recess or a protrusion disposed on the second surface in a region corresponding to the convex surface part.

### Advantageous Effects of Invention

According to the present invention, a highly accurate marker can be produced can be provided.

### Brief Description of Drawings

FIGS. 1A and 1B illustrate a configuration of a marker according to Embodiment 1 of the present invention;
FIG. 2 is a cross-sectional view of a metal mold for manufacturing a lenticular lens part of a marker by injection molding;
FIGS. 3A and 3B illustrate a method for aligning a metal mold;
FIGS. 4A and 4B illustrate a configuration of a marker according to a modification of Embodiment 1 of the present invention;
FIGS. 5A and 5B illustrate a configuration of a marker according to Embodiment 2 of the present invention;
FIGS. 6A and 6B illustrate a configuration of a marker according to Embodiment 3 of the present invention;
FIGS. 7A and 7B illustrate a configuration of a marker according to Embodiment 4 of the present invention;
FIG. 8 illustrates a configuration of a marker according to Embodiment 5 of the present invention;
FIGS. 9A to 9C illustrate a configuration of a marker according to Embodiment 6 of the present invention;
FIGS. 10A to 10D illustrate a configuration of a marker according to Embodiment 7 of the present invention;
FIGS. 11A to 11D illustrate a configuration of a marker according to Embodiment 8 of the present invention; and

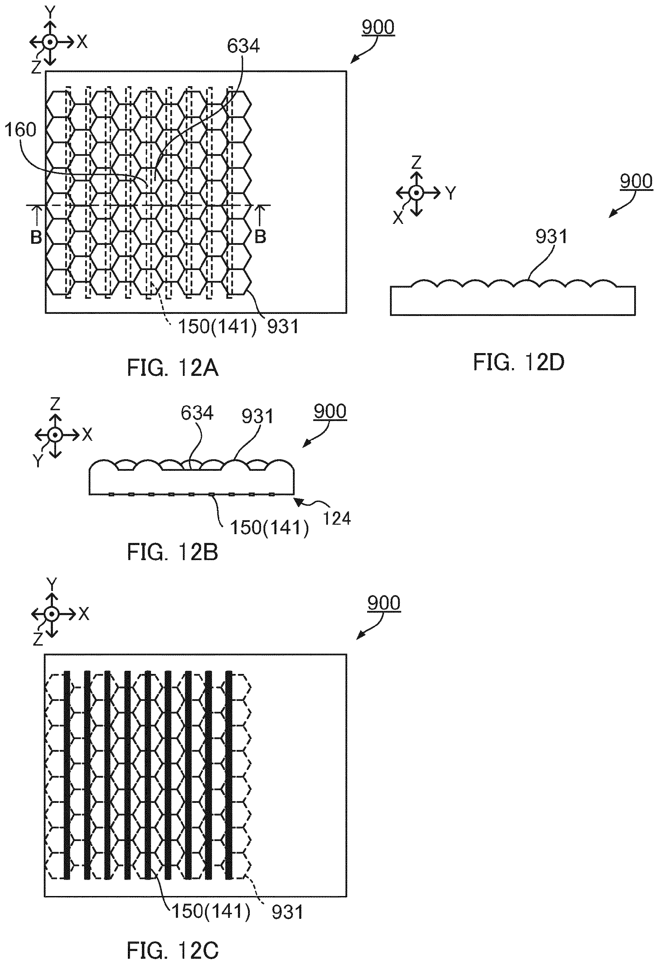

FIGS. 12A to 12D illustrate a configuration of a marker according to Embodiment 9 of the present invention.

### Description of Embodiments

Markers according to embodiments of the present invention are described below with reference to the accompanying drawings.

### Embodiment 1

### (Configuration of marker)

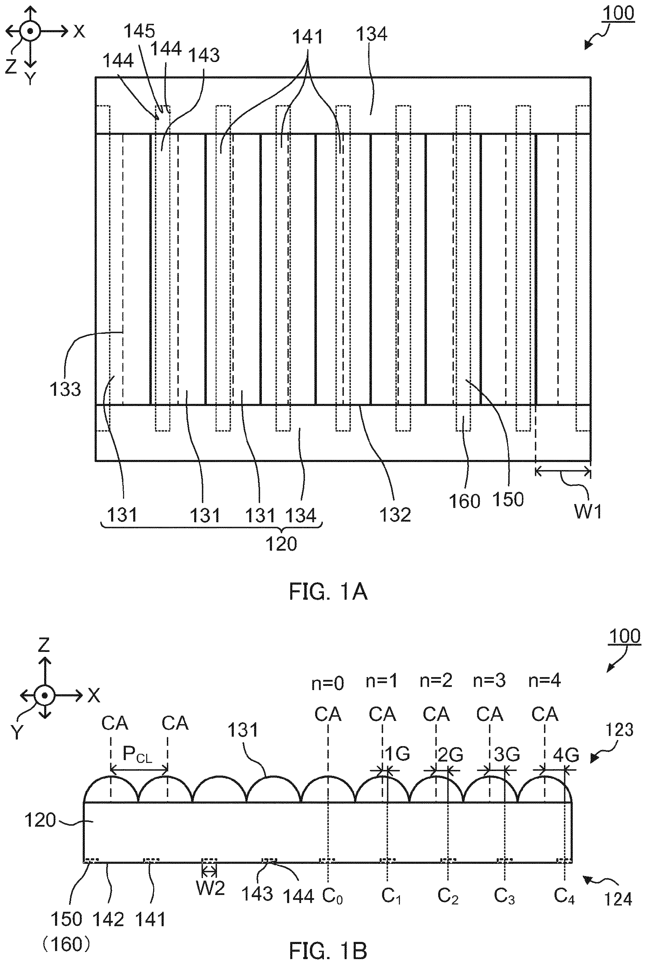

FIGS. 1A and 1B illustrate a configuration of marker 100 according to Embodiment 1 of the present invention. FIG. 1A is a plan view of marker 100 according to Embodiment 1 of the present invention, and FIG. 1B is a front view of marker 100.

As illustrated in FIGS. 1A and 1B, marker 100 includes lenticular lens part 120, and detection object part (coating film) 150.

Lenticular lens part (convex lens part) 120 includes first surface (front surface) 123, and second surface (rear surface) 124 disposed on the opposite side of first surface 123. First surface 123 includes a plurality of convex surface parts 131, and two flat surface parts 134. In addition, second surface 124 includes first region 141, and second region 142, which is a region other than first region 141 in second surface 124. The material of lenticular lens part 120 is, for example, a transparent resin having optical transparency, such as polycarbonate and acrylic resin.

Convex surface part 131 extends in a first direction (the Y direction in FIG. 1) perpendicular to the thickness direction of lenticular lens part 120. Convex surface part 131 is a curved surface that includes ridgeline 133 linearly extending in the first direction, and has a curvature only in a second direction (the X direction in FIG. 1) perpendicular to the thickness direction of lenticular lens part 120 and the first direction. A plurality of convex surface parts 131 are arranged in the second direction such that ridgelines 133 are parallel to each other. In addition, side surface parts 132 that are orthogonal to the first direction are disposed at the both ends of convex surface parts 131 in the first direction.

Two adjacent convex surface parts 131 of the plurality of convex surface parts 131 may be separated from each other, or may be disposed with no gap therebetween. In the present embodiment, two adjacent convex surface parts 131 of the plurality of convex surface parts 131 are disposed with no gap therebetween.

Convex surface parts 131 have the same size. For example, width W1 (the length in the first direction) of each convex surface part 131 is 370 µm, and the pitch P_{CL} of convex surface parts 131 is 370 µm. The term "pitch" is the distance between ridgelines 133 (or central axes CA) of convex surface parts 131 adjacent to each other in the second direction, and is also the length (width) of convex surface part 131 in the second direction. The term "central axis CA of convex surface part 131" is a straight line passing through the center of convex surface part 131 and extending along a third direction (the Z direction in FIG. 1) perpendicular to the first direction and the second direction in plan view of convex surface part 131.

The cross-sectional shape of convex surface part 131 in a direction along a virtual plane perpendicular to a virtual line extending along the first direction may be a curve or an arc. The term "curve" is a curve other than an arc, and is, for example, a curve composed of arcs having different curvature radiuses. Preferably, in the present embodiment, the curve is a curve whose curvature radius increases in the direction away from the ridgeline of convex surface part 131. In addition, in the present embodiment, convex surface parts 131 have the same the cross-sectional shape in the first direction.

In the first direction, flat surface part 134 is disposed outside convex surface part 131. Flat surface part 134 is connected with side surface part 132, and is parallel to a virtual plane including a virtual line along the first direction and a virtual line along the second direction.

First region 141 is disposed in a part of a region corresponding to convex surface part 131 in second surface 124. In plan view of lenticular lens part 120, first region 141 is disposed along the first direction. First region 141 may be a recess or a protrusion. In the present embodiment, first region 141 is a recess. In addition, in the present embodiment, the region other than first region 141 in second surface 124 is second region 142. The shape of first region 141 is not limited as long as detection object part 150 forms an optically detectable image having a predetermined width when viewed along the third direction (thickness direction) orthogonal to the first direction and the second direction. In the present embodiment, in plan view, first region 141 has a rectangular shape elongated in the first direction.

In the first direction, the both ends of the recess that serves as first region 141 are located outside the both ends of convex surface part 131. Specifically, the both ends of the recess that serves as first region 141 are disposed at positions corresponding to flat surface parts 134. That is, in the first direction, the recess that serves as first region 141 is longer than convex surface part 131. The recess that serves as first region 141 includes top surface 143, a pair of first inner surfaces 144 that are opposite to each other in the short direction, and a pair of second inner surfaces 145 that are opposite to each other in the longitudinal direction. Top surface 143 is parallel to second region 142 and flat surface part 134. In addition, the pair of first inner surfaces 144 and the pair of second inner surfaces 145 are perpendicular to second region 142.

In addition, the depth of the recess that serves as first region 141 is not limited as long as ease of application of the coating material and a desired function (indication of images) can be ensured. The range of the depth of the recess that serves as first region 141 may be 10 to 100 µm. In the present embodiment, the depth of the recess that serves as first region 141 is 10 µm. Length (width) W2 of the recess that serves as first region 141 in the second direction is 45 µm, for example. The smaller the width W2 of first region 141 with respect to P_{CL}, the higher the contrast of the image appearing on convex surface part 131 side tends to be. The larger the width W2 of first region 141 with respect to P_{CL}, the easier the production of first region 141 and detection object part 150. Preferably, the ratio of width W2 of first region 141 to pitch P_{CL} (W2/P_{CL}) is 1/100 to 1/5 in view of obtaining a sufficiently clear image.

First regions 141 are positioned in respective convex surface parts 131 such that images of first regions 141 are observed at a center portion of lenticular lens part 120 in the second direction when marker 100 is observed from first surface 123 side at the center of convex surface parts 131 in the second direction.

For example, in the second direction, first region 141 corresponding to convex surface part 131 located at the center of lenticular lens part 120 (convex surface part 131 of n=0 in FIG. 1B) is disposed such that center Co thereof is located on central axis CA of convex surface part 131 of n=0.

The center-to-center distance (|Cₙ-Cₙ₋₁|) of first regions 141 corresponding to two convex surface parts 131 adjacent to each other in the second direction is represented by P_{CL}+nG µm. As described above, P_{CL} is the distance between of ridgelines 133 of two convex surface parts 131 adjacent to each other in the second direction. In addition, G is a predetermined distance (e.g. 8 µm) from P_{CL} in the second direction for ensuring the desired optical effect of images. Further, n represents an order of a certain convex surface part 131 with respect to 0th convex surface part 131 located at the center in the second direction.

With this configuration, first regions 141 corresponding to convex surface parts 131 other than convex surface part 131 located at the center (n=0) are disposed outside central axes CA of respective convex surface parts 131 in the second direction.

Detection object part 150 is formed in first region 141. Detection object part 150 is a solidified black liquid coating material, for example.

Detection object part 150 is produced through application and solidification of a coating material. The black liquid coating material has fluidity, and is a liquid composition or powder. The method of application and solidification of the coating material may be appropriately selected from publicly known methods in accordance with the coating material. Examples of the application method of the black liquid coating material include spray coating and screen printing. Examples of the solidification method of the black liquid coating material include drying of a black liquid coating material, curing of a curable composition (such as radical polymerizable compound) in a black liquid coating material, and baking of powder.

Detection object part 150 forms an optically discriminable portion. The term "optically discriminable" means that detection object part 150 and another portion are clearly different in their optical characteristics. The term "optical characteristics" means, for example, the degrees of the color such as brightness, saturation and hue, or the optical intensity such as luminance. The term "difference" may be appropriately set in accordance with the use of marker 100, and may be a difference which can be visually checked, or a difference which can be confirmed with an optical detection apparatus, for example. In addition, the difference may be a difference which can be directly detected from detection object part 150, or a difference which can be detected through an additional operation such as irradiation of an UV lamp as in the case where detection object part 150 is a transparent film that emits fluorescence, for example.

Positioning part 160 indicates the position of first region 141 with respect to convex surface part 131. Positioning part 160 is formed in the region corresponding to flat surface part 134 in second surface 124. The shape of positioning part 160 is not limited as long as the above-described function can be ensured. In the present embodiment, in the first direction, positioning part 160 is a recess that is continuous to first region 141 and extends to the outside of convex surface part 131. In this manner, the recess that serves as first region 141 and the recess that serves as positioning part 160 are integrally formed, and thus the positional relationship of the recesses can be precisely set. It is to be noted that positioning part 160 is formed in the region corresponding to flat surface part 134 in second surface 124 such that the position corresponding to first region 141 can be correctly set even when the shape and the position of positioning part 160 are different.

When marker 100 is placed on a white object, light which is incident on first region 141 through convex surface part 131 is absorbed by detection object part 150, whereas light which is incident on other portions (second region 142) through convex surface part 131 is generally reflected by the object surface. As a result, an image of a colored (black) line of detection object part 150 is projected on convex surface part 131 with a white background.

Since first regions 141 are appropriately disposed in accordance with their distances from the center of marker 100 in the second direction, a black collective image that is a group of the black line images is observed in the entirety of lenticular lens part 120 when marker 100 is observed from first surface 123 side of lenticular lens part 120.

For example, when marker 100 is viewed from the center of lenticular lens part 120 in the second direction, the black collective image is observed at a center portion in the second direction. When marker 100 is observed from a different angle, the collective image is observed at a different position in the second direction depending on the angle. That is, the angle of the observation position of marker 100 is determined based on the position of the collective image in the second direction.

### Manufacturing method of marker

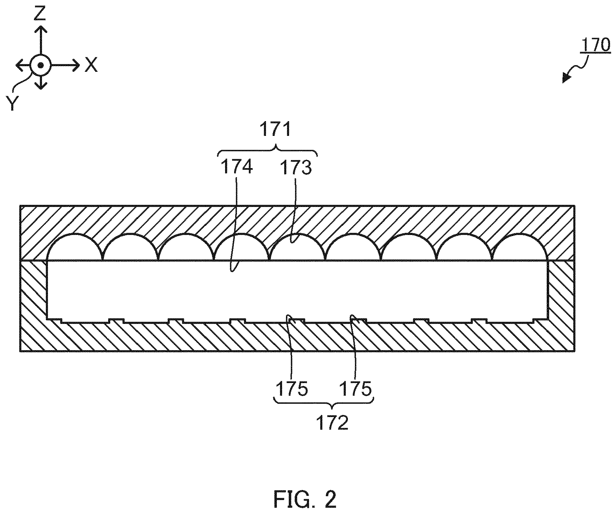

Marker 100 can be produced by the following method. FIG. 2 is a cross-sectional view of metal mold 170 for manufacturing lenticular lens part 120 of marker 100 by injection molding.

First, lenticular lens part 120 is molded by injection molding with a transparent resin. First, metal mold 170 is aligned and clamped (mold clamping step). Next, a molten resin is supplied to fill metal mold 170 (filling step). Then, with metal mold 170 filled with the molten resin, natural cooling is performed while holding the pressure (pressure holding step). Further, the clamped metal mold 170 is opened (mold opening step). Finally, an injection-molded article (lenticular lens part 120) is removed from the open metal mold 170 (removing step). It is to be noted that the injection-molded article is produced with metal mold 170 illustrated in FIG. 2. Metal mold 170 includes upper mold 171 and lower mold 172. Upper mold 171 includes recessed surface part 173 having a shape corresponding to convex surface part 131, and flat surface 174 having a shape corresponding to flat surface part 134. Lower mold 172 includes linear projection 175 having a shape corresponding to first region 141. Through the above-mentioned steps, lenticular lens part 120 including convex surface part 131 and flat surface part 134 on first surface 123 side (front side) and first region 141 and second region 142 on second surface 124 side (rear side) is obtained in the form of an integrally molded-article of a transparent resin. The mold clamping step is an important step of the manufacturing method of lenticular lens part 120 by injection molding, and therefore the mold clamping step is elaborated later.

Next, a coating material is applied to first region 141 to produce detection object part 150. To be more specific, the coating material is supplied to the entirety of first region 141 or to a certain depth of first region 141, and then the coating material is solidified. In this manner, detection object part 150 that has a thickness equal to the supplied depth of the coating material and covers top surface 143 of first region 141 is produced.

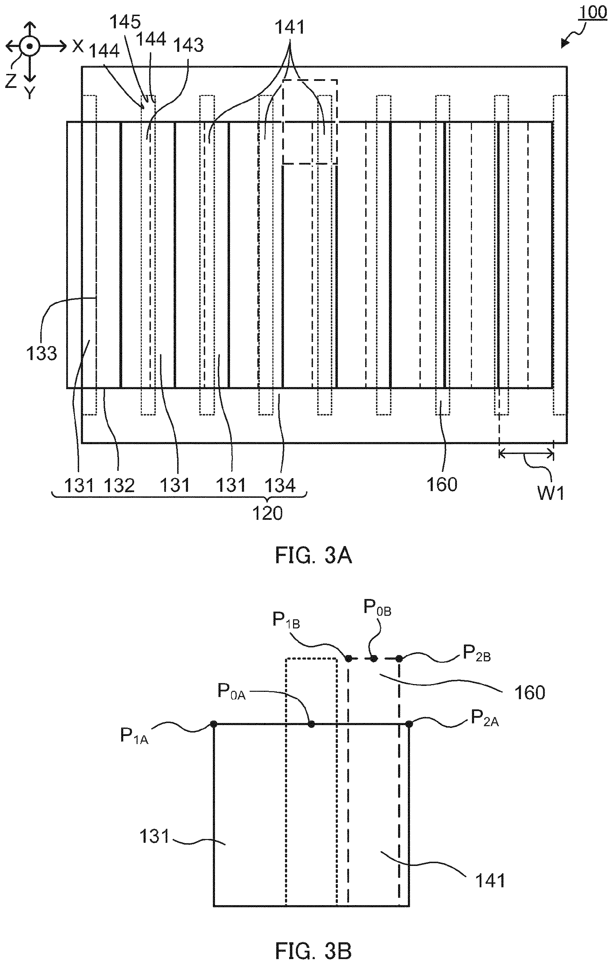

Now, the mold clamping step is elaborated. FIGS. 3A and 3B illustrate a method for aligning metal mold 170. FIG. 3A is a plan view of an injection-molded article in which the positions of convex surface part 131 and first region 141 are shifted in the second direction, and FIG. 3B is an enlarged view of the region enclosed by the broken line in FIG. 3A. Here, to simplify the description, the method is described based on the case where the positions of convex surface part 131 and first region 141 are shifted only in the second direction.

In the mold clamping step, metal mold 170 is aligned so as to produce a desired injection-molded article (lenticular lens part 120). As described above, the position and the shape of images to be observed in marker 100 are important points. That is, the position of first region 141 with respect to convex surface part 131 is an important factor. However, when aligning recessed surface part 173 corresponding to convex surface part 131 and linear projection 175 corresponding to first region 141 in the mold clamping step, recessed surface part 173 and linear projection 175 cannot be visually recognized when upper mold 171 and lower mold 172 are joined together. Consequently, the positional relationship between recessed surface part 173 and linear projection 175 cannot be correctly determined, and metal mold 170 cannot be accurately aligned. In view of this, in the present embodiment, a trial molding is conducted, and metal mold 170 is accurately aligned based on the injection-molded article obtained through the trial molding.

The method for aligning metal mold 170 includes a first step of acquiring location information of convex surface part 131 in an injection-molded article obtained through a trial molding, a second step of acquiring location information of positioning part 160 in the injection-molded article obtained through the trial molding, a third step of acquiring information for adjusting metal mold 170 based on the position of convex surface part 131 and the position of positioning part 160, and a fourth step of aligning metal mold 170 so as to set a predetermined positional relationship between convex surface part 131 and first region 141 after the aligning. It is to be noted that the information of the position where first region 141 should be located with respect to convex surface part 131, and the information of the position of positioning part 160 with respect to first region 141 are set by design.

In the first step, for example, an injection-molded article is imaged from first surface 123 side with an appropriate image pickup means, and the location information of convex surface part 131 is acquired. The location information of convex surface part 131 is not limited as long as the position of convex surface part 131 can be specified. For example, the location information of convex surface part 131 may be the location information of central axis CA of convex surface part 131, or the location information (P_{0A}) of the center of side surface part 132 in plan view of lenticular lens part 120. In the present embodiment, the location information of convex surface part 131 is location information (P_{0A}) of the center of side surface part 132 in plan view of lenticular lens part 120. The location information of the center (P_{0A}) of side surface part 132 may be acquired by any method. The location information (P_{0A}) of the center of side surface part 132 may be determined by acquiring location information (P_{1A}, P_{2A}) of end portions of two long sides convex surface part 131, and by determining the center of the two positions, for example.

In the second step, for example, the injection-molded article is imaged from the position same as in the first step with the same image pickup means, and the location information of positioning part 160 is acquired. The location information of positioning part 160 is not limited as long as the position of positioning part 160 can be specified. The location information of positioning part 160 may be the location information of the center of positioning part 160, or the location information (P_{0B}) of the center of end portion of positioning part 160, for example. In the present embodiment, the location information of positioning part 160 is the location information (P_{0B}) of the center of the end portion of positioning part 160. The location information (P_{0B}) of the center of the end portion of positioning part 160 may be acquired by any method. The location information (P_{0B}) of the center of the end portion of positioning part 160 may be determined by acquiring location information (P_{1B}, P_{2B}) of end portions of the two long sides of positioning part 160, and by determining the center of the two positions, for example. At this time, the location information of positioning part 160 is correctly detected since the information is detected through flat surface part 134, not through convex surface part 131.

In the third step, information for aligning metal mold 170 is acquired from the location information of convex surface part 131 (P_{0A}) determined in first step, and the location information of positioning part 160 (P_{0B}) determined in the second step. The information for aligning metal mold 170 is the moving direction and the moving distance of metal mold 170. As seen in FIG. 3B, the two points (the center of side surface part 132 and the center of the end portion of positioning part 160) which should be located at the same position in the second direction (the X direction) are shifted in the second direction (the X direction). Accordingly, upper mold 171 or lower mold 172 would need to be moved in the second direction by a predetermined distance.

In the fourth step, metal mold 170 is moved by the direction and the distance determined in the third step such that first region 141 and convex surface part 131 after the injection molding are set in a desired positional relationship.

Through the above-mentioned procedure, metal mold 170 can be accurately aligned by moving metal mold 170 based on the location information of convex surface part 131 and positioning part 160.

### Effect

As described above, marker 100 according to the present embodiment includes positioning part 160 that can be detected through flat surface part 134 that can be detected through flat surface part 134, and thus metal mold 170 can be accurately aligned based on first region 141 and convex surface part 131 of lenticular lens part 120 after the injection molding. Accordingly, highly accurate marker 100 can be obtained.

### Modification

Marker 100' according to a modification of Embodiment 1 differs from marker 100 according to Embodiment 1 only in configuration of lenticular lens part 120'. In view of this, the configurations similar to those of light emitting device 100 according to Embodiment 1 will be denoted with the same reference numerals, and the description thereof will be omitted.

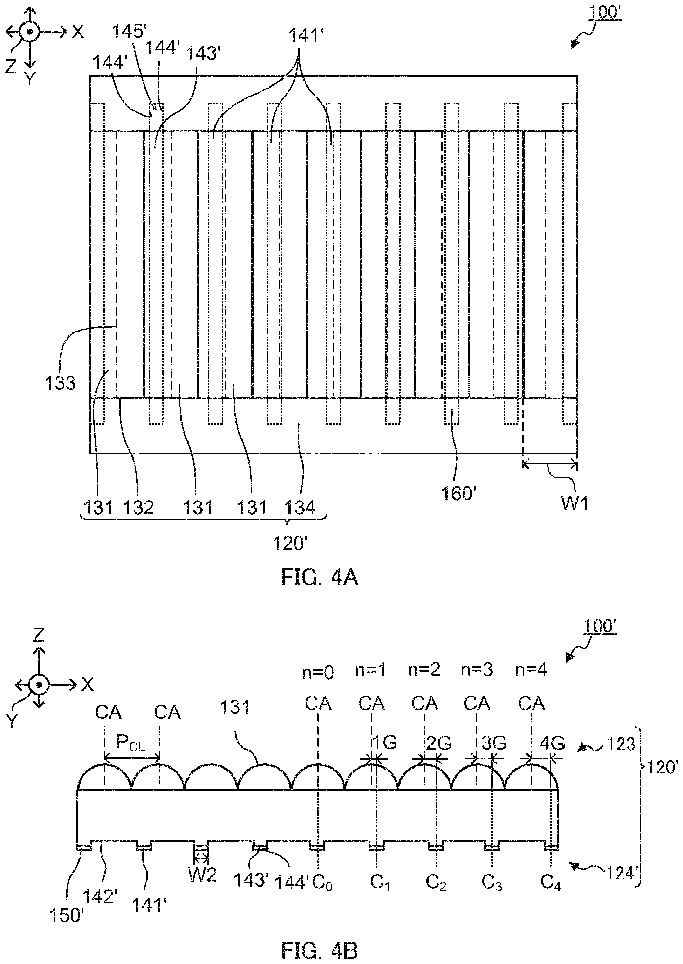

FIGS. 4A and 4B illustrate a configuration of marker 100' according to the modification of Embodiment 1 of the present invention. FIG. 4A is a plan view of marker 100' according to the modification of Embodiment 1, and FIG. 4B is a front view of marker 100'.

As illustrated in FIGS. 4A and 4B, lenticular lens part 120' according to the modification of Embodiment 1 includes first surface 123 and second surface 124'. First surface 123 includes a plurality of convex surface parts 131, and two flat surface parts 134. Second surface 124' includes first region 141', and second region 142' that is regions other than first region 141' in second surface 124'.

The shape of first region 141' includes top surface 143', a pair of first outer surfaces 144' that are opposite to each other in the short direction, and a pair of second outer surfaces 145' that are opposite to each other in the longitudinal direction. Top surface 143' is parallel to second region 142'. In addition, the pair of first outer surfaces 144' and the pair of second outer surfaces 145' are perpendicular to second region 142'. That is, the configuration is identical to that of marker 100 except that first region 141' is a protrusion, and second region 142' is a surface that is flat with respect to first region 141'.

Detection object part 150' is formed at top surface 143' of first region 141'. In view of ensuring ease of application of a coating material and a desired function (indication of images), the range of the height of first region 141' may be 10 to 100 µm, and is for example 10 µm.

Positioning part 160' is a protrusion that is formed continuously from first region 141' so as to extend outward relative to convex surface part 131 in the first direction.

Marker 100' is also produced by producing lenticular lens part 120' by injection molding with an appropriate metal mold, and by applying a coating material to top surface 143' of an integrally molded-article so as to produce detection object part 150'.

In addition, marker 100' according to the modification also can correctly align metal mold 170 based on the location information of convex surface part 131' and positioning part 160'. It is to be noted that also with marker 100' according to the modification of Embodiment 1, the location information of positioning part 160' can be correctly detected through flat surface part 134.

### Effect

Marker 100' according to the modification of Embodiment 1 has an effect similar to that of Embodiment 1.

### Embodiment 2

Marker 200 according to Embodiment 2 differs from marker 100 according to Embodiment 1 only in configuration of lenticular lens part 220. In view of this, the configurations similar to those of light emitting device 100 according to Embodiment 1 will be denoted with the same reference numerals, and the description thereof will be omitted.

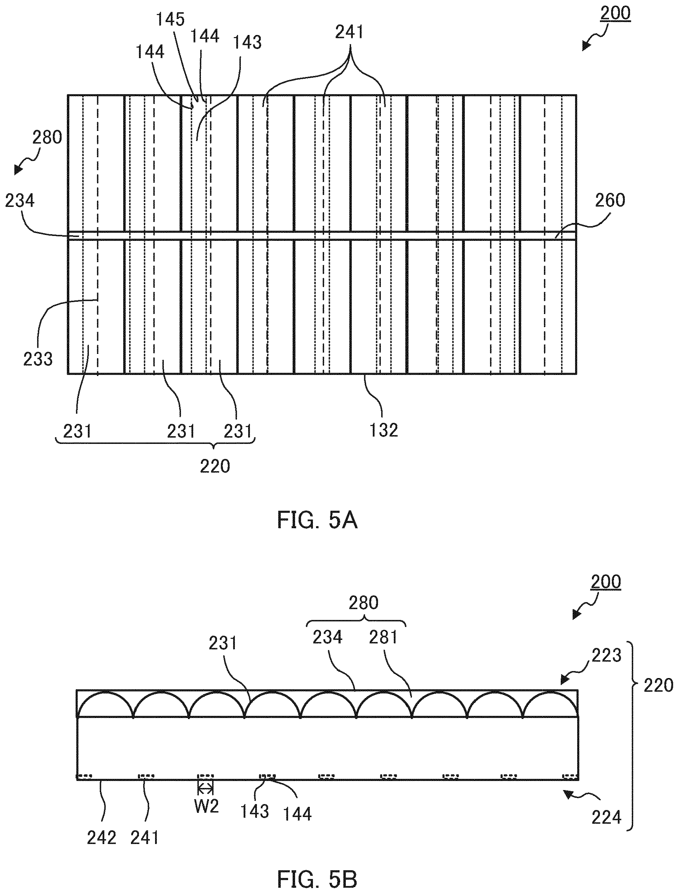

FIGS. 5A and 5B illustrate a configuration of marker 200 according to Embodiment 2 of the present invention. FIG. 5A is a plan view of marker 200 according to Embodiment 2 of the present invention, and FIG. 5B is a front view of marker 200. As illustrated in FIGS. 5A and 5B, lenticular lens part 220 according to Embodiment 2 includes first surface 223 and second surface 224. First surface 223 includes a plurality of convex surface parts 231, and wall part 280 including flat surface part 234.

Wall part 280 is disposed on first surface 223 along a direction orthogonal to ridgeline 233 of convex surface part 231. Specifically, wall part 280 is disposed in such a manner as to bisect convex surface part 231. Wall part 280 includes flat surface part 234 as its top surface, and side surface 281 that connects flat surface part 234 and convex surface part 231. Flat surface part 234 is parallel to top surface 145 of first region 241 and second region 242. The position of wall part 280 with respect to convex surface part 231 in the first direction is not limited. In addition, the thickness of wall part 280 in the first direction is not limited as long as the function of marker 200 is not impaired. The thickness of wall part 280 is 10 to 20 µm, for example. Also, the height of wall part 280 is not limited as long as the function of marker 200 is not impaired. In the present embodiment, the height of the top surface (flat surface part 234) of wall part 280 is equal to the height of ridgeline 233 of convex surface part 231.

Positioning part 260 is a portion corresponding to wall part 280 in the recess forming first region 241. In marker 200 according to the present embodiment, flat wall part 280 including surface part 234 is disposed in such a manner as to bisect convex surface part 231, and accordingly the length of the recess that serves as first region 241 is equal to the length of convex surface part 231. Also in the present embodiment, the location information of positioning part 260 in marker 200 is correctly detected through flat surface part 234.

### Effect

Since convex surface part 231 and the recess have the same length in the first direction, marker 200 according to the present embodiment can be downsized while achieving the effect of marker 100 according to Embodiment 1.

### Embodiment 3

Marker 300 according to Embodiment 3 differs from marker 100 according to Embodiment 1 only in configuration of lenticular lens part 320. In view of this, the configurations similar to those of light emitting device 100 according to Embodiment 1 will be denoted with the same reference numerals, and the description thereof will be omitted.

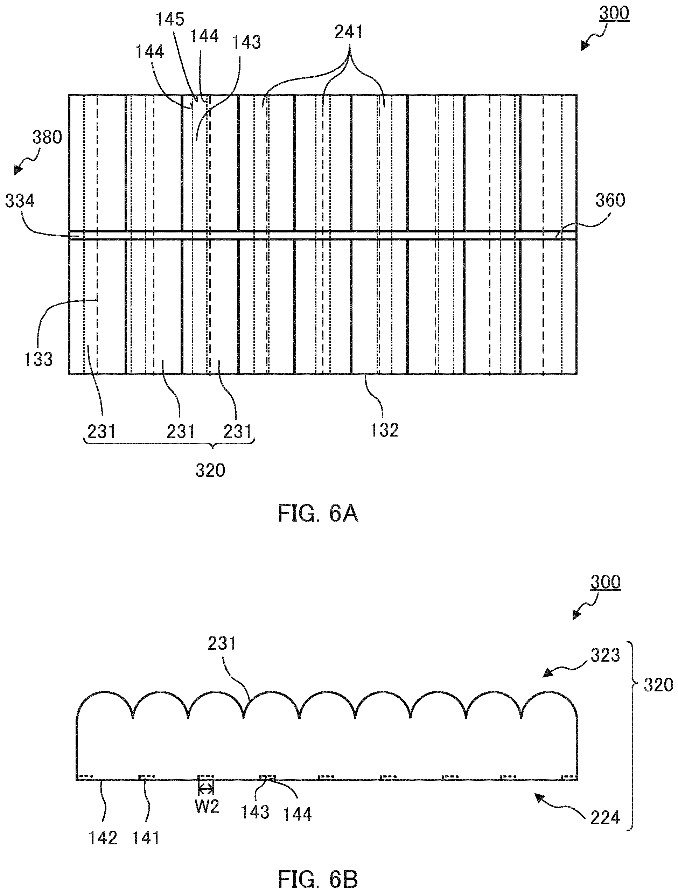

FIGS. 6A and 6B illustrate a configuration of marker 300 according to Embodiment 3 of the present invention. FIG. 6A is a plan view of marker 300 according to Embodiment 3 of the present invention, and FIG. 6B is a front view of marker 300.

As illustrated in FIGS. 6A and 6B, lenticular lens part 320 according to Embodiment 3 includes first surface 323 and second surface 224. The first surface includes a plurality of convex surface parts 231, and slit 380 including flat surface part 334.

Slit 380 is disposed on first surface 323 along a direction orthogonal to ridgeline 133 of convex surface part 231. That is, slit 380 is disposed in such a manner as to bisect convex surface part 231. Slit 380 includes flat surface part 334 as the bottom surface. Flat surface part 334 is parallel to top surface 143 of first region 141. The position of slit 380 with respect to convex surface part 231 in the first direction is not limited. In addition, the width of slit 380 in the first direction is not limited as long as the function of marker 300 is not impaired. The width of slit 380 is 10 to 20 µm, for example. The depth of slit 380 (the distance between flat surface part 334 and the apex of convex surface part 231) is not limited as long as the function of marker 300 is not impaired.

Positioning part 360 is a portion corresponding to wall part 280 in the recess forming first region 141. In marker 300 according to the present embodiment, slit 380 including flat surface part 334 is disposed in such a manner as to bisect convex surface part 231, and accordingly the length of the recess that serves as first region 141 is equal to the length of convex surface part 231. Also in the present embodiment, the location information of positioning part 360 in marker 300 is correctly detected through flat surface part 334.

### Effect

Marker 300 according to the present embodiment has an effect similar to that of marker 200 according to Embodiment 2.

### Embodiment 4

Marker 400 according to Embodiment 4 differs from marker 100 according to Embodiment 1 only in configuration of lenticular lens part 420. In view of this, the configurations similar to those of light emitting device 100 according to Embodiment 1 will be denoted with the same reference numerals, and the description thereof will be omitted.

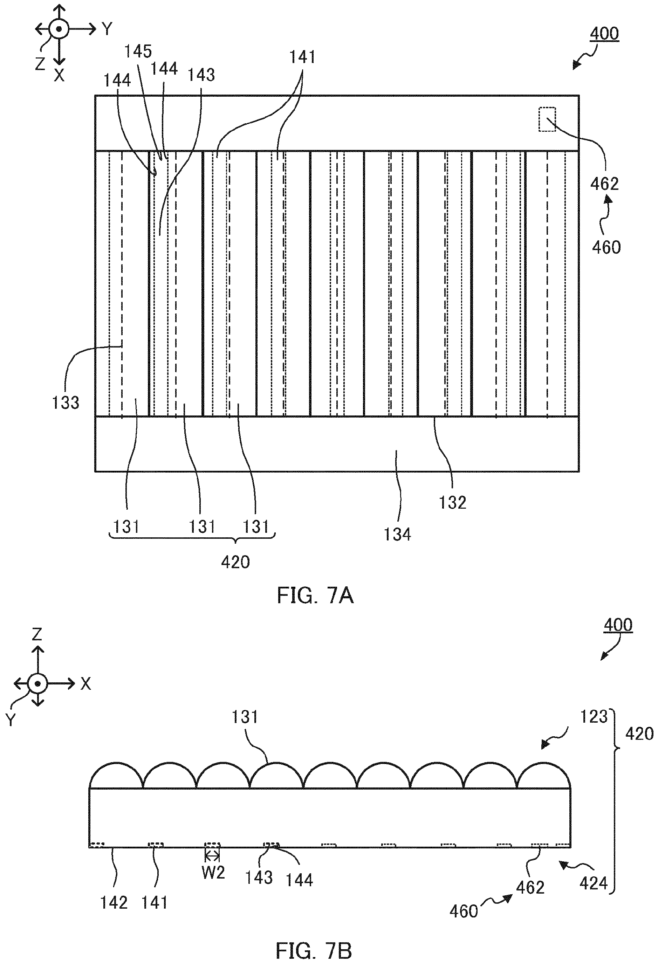

FIGS. 7A and 7B illustrate a configuration of marker 400 according to Embodiment 4 of the present invention. FIG. 7A is a plan view of marker 400 according to Embodiment 4 of the present invention, and FIG. 7B is a front view of marker 400.

As illustrated in FIGS. 7A and 7B, lenticular lens part 420 according to Embodiment 4 includes first surface 123 and second surface 424. Second surface 424 includes first region 141 and second region 142.

Positioning part 460 is a recess that opens in a region corresponding to flat surface part 134 in second surface 124. The shape of positioning part 460 is not limited as long as the position can be visually recognized when marker 400 is viewed from first surface 123. In the present embodiment, positioning part 460 is formed in a shape of a box that opens at its one surface. Bottom surface 462 of positioning part 460 is parallel to top surface 143 of first region 141. Also in the present embodiment, positioning part 460 can be correctly detected in marker 400 through flat surface part 134.

### Effect

Marker 400 according to the present embodiment has an effect similar to that of marker 100 according to Embodiment 1.

### Embodiment 5

Marker 500 according to Embodiment 5 differs from marker 100 according to Embodiment 1 only in arrangement of convex surface part 131. In view of this, the configurations similar to those of light emitting device 100 according to Embodiment 1 will be denoted with the same reference numerals, and the description thereof will be omitted.

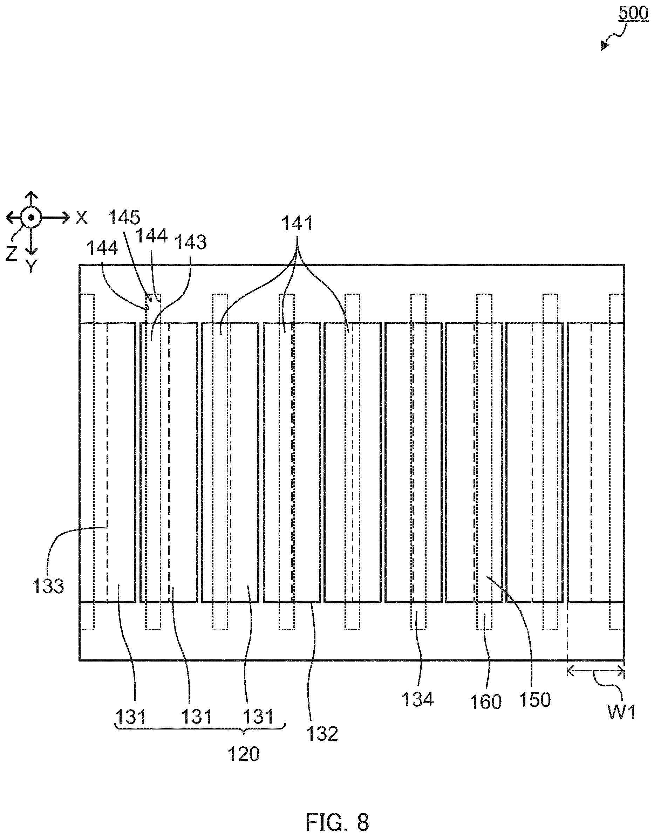

FIG. 8 illustrates a configuration of marker 500 according to Embodiment 5 of the present invention. As illustrated in FIG. 8, in Embodiment 5, convex surface parts 131 are disposed such that convex surface parts 131 adjacent to each other are separated from each other.

### Effect

With marker 500 according to the present embodiment, the position of convex surface part 131 can be highly accurately detected, and thus highly accurate marker 500 can be obtained while achieving the effect of marker 100 according to Embodiment 1.

### Embodiment 6

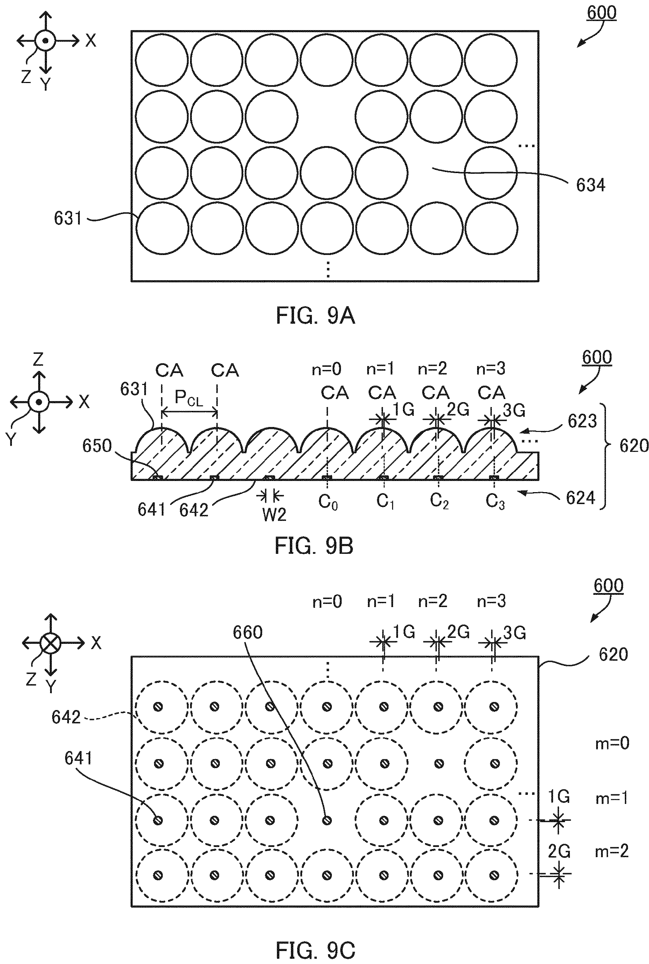

FIGS. 9A to 9C illustrate a configuration of marker 600 according to Embodiment 6 of the present invention. FIG. 9A is a plan view of marker 600 according to Embodiment 6 of the present invention, FIG. 9B is a front view of marker 600, and FIG. 9C is a bottom view of marker 600.

As illustrated in FIGS. 9A to 9C, marker 600 includes convex lens part 620 including first surface 623 and second surface 624, and detection object part 650.

Convex lens part 620 is an optical component composed of an injection-molded article of a transparent resin. Convex lens part 620 includes first surface 623 and second surface 624. First surface 623 includes a plurality of convex surface parts 631, and two or more flat surface parts 634. In addition, second surface 624 includes first region 641 and second region 642.

Convex surface parts 631 have circular planar shapes and the same size. For example, the diameter of the planar shape of convex surface part 631 is 350 µm, and pitch P_{CL} of convex surface parts 631 is 370 µm in each of the first direction and the second direction. The term "pitch" means the distance (P_{CL}) between convex surface parts 631 adjacent to each other.

Also, the cross-sectional shape of convex surface part 631 may be a spherical surface or an aspherical surface, and preferably, the aspherical surface is a curved surface whose curvature radius increases as the distance thereof from central axis CA of convex surface part 631 increases. That is, since central axis CA of convex surface part 631 is a straight line parallel to the third direction, it is preferable that the aspherical surface be a curved surface whose curvature radius increases as the distance thereof from central axis CA of convex surface part 631 increases in the direction along the XY plane. The term "central axis CA" means a straight line extending in the third direction and passing through the center of convex surface part 631 in plan view of convex surface part 631.

Flat surface part 634 is flush with the surface where convex surface part 631 is connected. The number of flat surface parts 634 is not limited as long as two or more flat surface parts 634 are provided. In the present embodiment, two flat surface parts 634 are provided. In addition, positioning parts 660 are disposed at positions corresponding to flat surface parts 634.

In addition, each of convex surface part 631 and flat surface part 634 includes first region 641 disposed on the rear surface side at a position corresponding to the each of convex surface part 631 and flat surface part 634. For example, first region 641 has a circular planar shape with a diameter of 45 µm and a depth of 10 µm. In addition, first region 641 has a rectangular cross-sectional shape in each of the first direction and the second direction.

The center-to-center distance (|Cn-Cn-1|) between first regions 641 adjacent to each other in the second direction is P_{CL}+nG µm, and the center-to-center distance (|Cm-Cm-1|) between first regions 641 adjacent to each other in the second direction is P_{CL}+mG µm. As described above, n represents the order of convex surface parts 631 in the second direction with a particular convex surface part 631 being set to 0th. The "m" represents an order of a certain convex surface part 631 with respect to 0th convex surface part 631 in the second direction.

Detection object part 650 is housed in each first region 641. Detection object part 650 is formed in such a manner as to cover the bottom surface of first region 641. In this manner, detection object part 650 is formed inside the walls of first region 641.

When marker 600 is observed from convex surface part 631 side, a collective image that is composed of images of black points of detection object parts 650 projected on convex surface parts 631 is observed. The position of the collective image changes depending on the viewing angle from convex surface part 631 side. With this configuration, marker 600 is used as a turning-angle measurement device in which an image moves in the plane direction in accordance with the viewing angle.

It is to be noted that the planar shape of convex surface part 631 may be a rectangular shape as well as the circular shape, and may be appropriately set as long as the shape functions as a convex lens. In addition, first region 641 may be replaced by a protrusion. Also, the planar shape of first region 641 may be shapes other than the circular shape, and may be a rectangular shape, for example.

### Effect

Marker 600 according to the present embodiment has an effect similar to that of marker 100 according to Embodiment 1.

### Embodiment 7

Marker 700 according to Embodiment 7 differs from marker 600 according to Embodiment 6 only in second surface 124. In view of this, the configurations similar to those of marker 600 according to Embodiment 6 will be denoted with the same reference numerals, and the description thereof will be omitted.

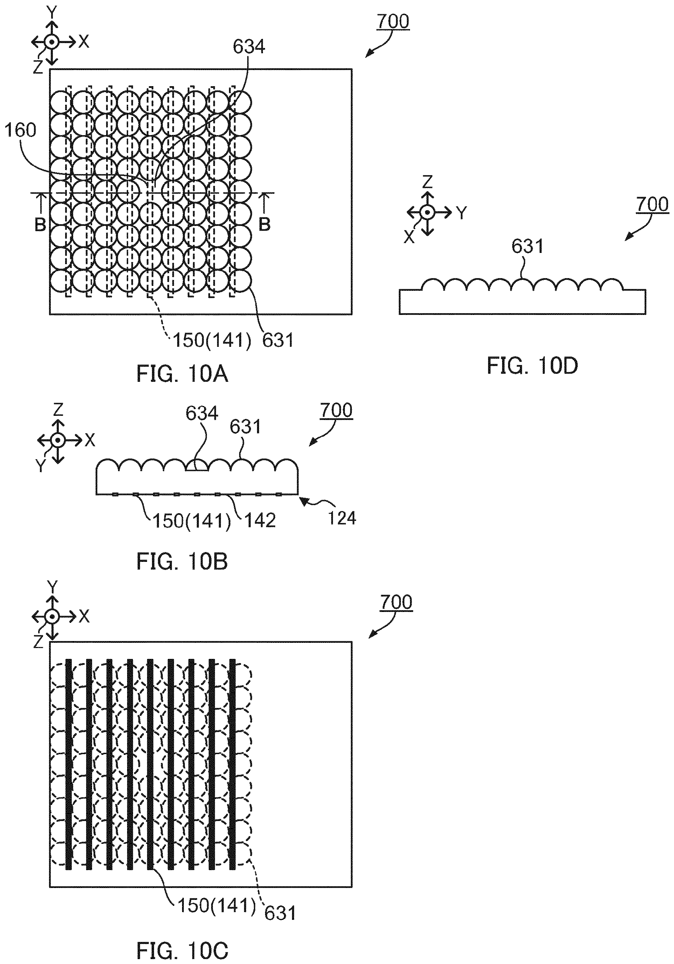

FIG. 10A is a plan view of marker 700, FIG. 10B is a sectional view of a part of marker 700 taken along line B-B of FIG. 10A in which hatching is omitted, FIG. 10C is a bottom view of marker 700, and FIG. 10D is a side view of marker 700.

Second surface 124 is similar to that of Embodiment 1. Specifically, second surface 124 includes first region 141 and second region 142. First region 141 is a slender rectangular recess extending along the Y direction in the XY plane, and is disposed across convex surface parts 631 arranged along the Y direction. In addition, second regions 124 are arranged in the X direction in such a manner as to correspond to the lines of convex surface part 631.

In addition, regarding the relationship between detection object part 150 and convex surface part 631 in the X direction, the pitch of adjacent convex surface parts 631 (the pitch of convex surface parts 631 of the adjacent lines) is greater than the center-to-center distance of adjacent detection object parts 150. In addition, positioning part 160 is disposed at a position corresponding to flat surface part 643.

In marker 700, a linear image along the Y direction is observed as a group of images projected on convex surface parts 631. This image appears such that the image approaches the viewer as marker 700 is tilted to the viewer side with respect to the X direction.

### Effect

In marker 700 according to the present embodiment, convex surface part 631 is curved not only in the X direction, but also in the Y direction, and thus the contrast of the image in the Y direction is high.

### Embodiment 8

Marker 800 according to Embodiment 8 differs from marker 700 according to Embodiment 7 only in configuration of convex surface part 831. In view of this, the configurations similar to those of marker 700 according to Embodiment 7 will be denoted with the same reference numerals, and the description thereof will be omitted.

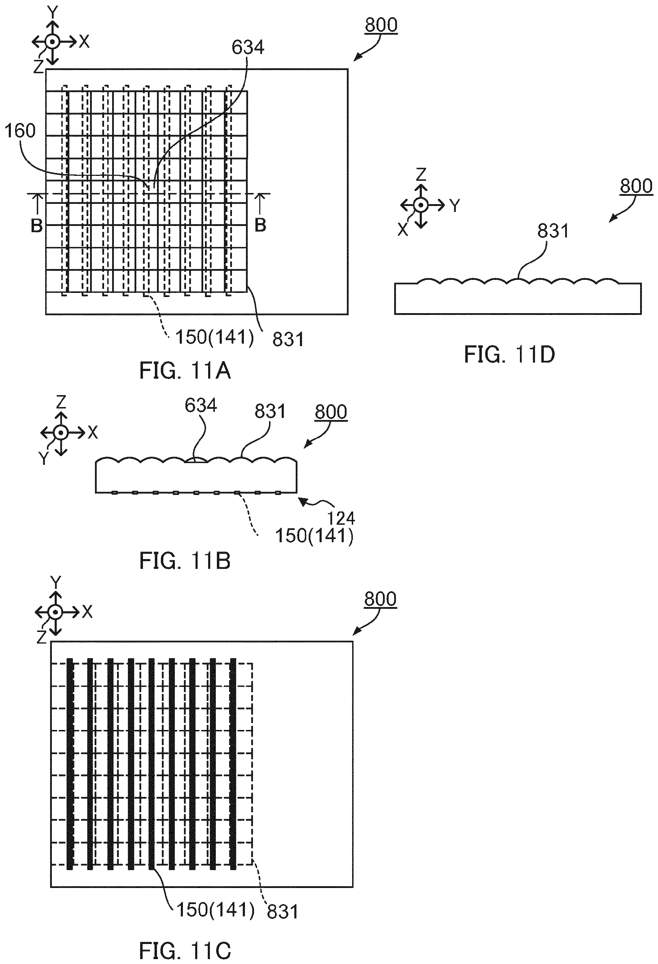

FIG. 11A is a plan view of marker 800, FIG. 11B is a sectional view of a part of marker 800 taken along line B-B of FIG. 11A in which hatching is omitted, FIG. 11C is a bottom view of marker 800, and FIG. 11D is a side view of marker 800.

In Embodiment 8, convex surface part 831 has a square planar shape. In addition, for example, convex surface part 831 has a spherical shape (arc shape) in the cross-section along the optical axis.

### Effect

In addition to an effect similar to that of marker 700 according to Embodiment 7, with marker 800 according to the present embodiment, the image is clearly detected regardless of the intensity of the light incident on the first surface of the lenticular lens part. One possible reason for this is that, practically, the first surface of marker 800 is composed only of convex surface part 631 (curved surface) and includes no flat surface part, and thus reflection light at the first surface is less likely to be generated or is weak in comparison with marker 700 although, in the case where the intensity of the incident light is high, the intensity of the reflection light of marker 800 such as the reflection light on the first surface is also high, and the visibility of the image might be reduced.

### Embodiment 9

Marker 900 according to Embodiment 9 is different from marker 700 according to Embodiment 7 only in configuration of convex surface part 931. In view of this, the configurations similar to those of marker 700 according to Embodiment 7 will be denoted with the same reference numerals, and the description thereof will be omitted.

FIG. 11A is a plan view of marker 900, FIG. 11B is a sectional view of a part of marker 900 taken along line B-B of FIG. 11A, in which hatching is omitted, FIG. 11C is a bottom view of marker 900, and FIG. 11D is a side view of marker 900.

In Embodiment 9, convex surface part 931 has a regular-hexagon planar shape. In addition, for example, convex surface part 931 has a spherical shape (arc shape) in the cross-section along the optical axis. Regarding the line of convex surface parts 931 in the Y direction, convex surface parts 931 are arranged along the Y direction such that their opposed sides are in contact with each other. In addition, the lines of convex surface parts 931 are arranged in the X direction such that of each connecting part of convex surface parts 73 of one line is in contact with a corner of the hexagon of each convex surface part 931 of another line. In this manner, in marker 900, convex surface parts 931 are fully closely arranged in a collective manner over the entirety of the first surface.

### Effect

Marker 900 according to the present embodiment has an effect similar to that of marker 800 according to Embodiment 8.

While the detection object part is made of a solidified coating material in the embodiments, the detection object part may be made of a colored seal.

While the detection object part is a coating film disposed in the first region in the embodiments, the detection object part may be disposed in both of the first region and the second region. In this case, the first regions and the second regions may be coating films and/or seals of different colors. Further, the detection object part may be a reflection surface composed of an irregularity of pyramidal minute prism and a metal-vapor deposited film and the like which is formed in the first region and/or the second region.

This application is entitled to and claims the benefit of Japanese Patent Application No. 2015-249997 filed on December 22, 2015, the disclosure each of which including the specification, drawings and abstract is incorporated herein by reference in its entirety.

### Industrial Applicability

The marker according to the embodiments of the present invention is useful as a measuring device for recognizing the position and/or the orientation of an object and the like. In addition, the present invention is expected to contribute not only to development of the technical field of the measuring device, but also to development of various technical fields where highly accurate application of a pattern to the convex lens is desired.

### Reference Signs List

100, 100', 200, 300, 400, 500, 600, 700, 800, 900 Marker
120, 120', 220, 320, 420 Lenticular lens part
123, 223, 323, 623 First surface
124, 124', 224, 424, 624 Second surface
131, 231, 631, 831, 931 Convex surface part
132 Side surface part
133, 233 Ridgeline
134, 234, 334, 634 Flat surface part
141, 141', 241, 641 First region
142, 142', 242, 642 Second region
143 Top surface
143' Top surface
144 First inner surface
144' First outer surface
145 Second inner surface
145' Second outer surface
150, 150', 650 Detection object part
160, 160', 260, 360, 460, 660 Positioning part
462 Bottom surface
170 Metal mold
171 Upper mold
172 Lower mold
173 Recessed surface part
174 Flat surface
175 Linear projection
280 Wall part
281 Side surface
380 Slit
620 Convex lens part

## Claims

1. A marker, comprising:
a convex lens part made of an optically transparent resin and including a first surface and a second surface disposed on a side opposite to the first surface, the first surface including a convex surface part and a flat surface part, the second surface including a first region and a second region which is a region other than the first region in the second surface;
a detection object part formed in one of the first region and the second region, or in both of the first region and the second region; and
a positioning part formed on the second surface in a region corresponding to the flat surface part, and configured to indicate a position of the first region with respect to the convex surface part,
wherein the first region is a recess or a protrusion disposed on the second surface in a region corresponding to the convex surface part.

2. The marker according to claim 1,
wherein the convex surface part is a curved surface including a ridgeline linearly extending in a first direction perpendicular to a thickness direction of the convex lens part, the curved surface having a curvature only in a second direction perpendicular to the thickness direction of the convex lens part and the first direction;
wherein in the first direction, the flat surface part is disposed outside the convex surface part;
wherein the recess or the protrusion is linearly formed on the second surface such that the recess or the protrusion is longer than the convex surface part in the first direction; and
wherein the positioning part is a portion of the recess or the protrusion formed on the second surface, the portion being located outside the convex surface part.

3. The marker according to claim 1,
wherein the convex surface part is a curved surface including a ridgeline linearly extending in a first direction perpendicular to a thickness direction of the convex lens part, the curved surface having a curvature only in a second direction perpendicular to the thickness direction of the convex lens part and the first direction;
wherein the flat surface part is a top surface of a wall part disposed along a direction orthogonal to the ridgeline on the first surface;
wherein the recess or the protrusion is linearly formed along the first direction on the second surface; and
wherein the positioning part is a portion of the recess or the protrusion formed on the second surface, the portion corresponding to the wall part.

4. The marker according to claim 1,
wherein the convex surface part is a curved surface including a ridgeline linearly extending in a first direction perpendicular to a thickness direction of the convex lens part, the curved surface having a curvature only in a second direction perpendicular to the thickness direction of the convex lens part and the first direction;
wherein the flat surface part is a bottom surface of a slit disposed along a direction orthogonal to the ridgeline on the first surface;
wherein the recess or the protrusion is linearly formed along the first direction on the second surface; and
wherein the positioning part is a portion of the recess or the protrusion formed on the second surface, the portion corresponding to the slit.

5. The marker according to any one of claims 2 to 4,
wherein a plurality of the convex surface parts are arranged in the second direction; and
wherein the plurality of convex surface parts are disposed such that the convex surface parts adjacent to each other are separated from each other.
